# EUROPÄISCHE PATENTSCHRIFT

(11) **EP 2 233 900 B1**
(45) Veröffentlichungstag und Bekanntmachung des Hinweises auf die Patenterteilung: **18.05.2016**
(21) Anmeldenummer: 10152345.4
(22) Anmeldetag: 02.02.2010
(51) Int. Cl.: G01L 1/14, G01L 9/00

(54) **Kapazitiver Drucksensor**
Capacitive pressure sensor
Capteur de pression capacitif

(30) Priorität: 27.03.2009 DE 102009001924
(43) Veröffentlichungstag der Anmeldung: 29.09.2010
(73) Patentinhaber: Robert Bosch GmbH, 70442 Stuttgart (DE)
(72) Erfinder: Doering, Christian, 70563, Stuttgart (DE)

(56) Entgegenhaltungen:
- EP-A1- 1 653 209
- JP-A- S58 160 831
- JP-A- 2002 195 903
- US-A- 5 585 311
- US-A1- 2005 183 508

## Beschreibung

Die vorliegende Erfindung betrifft einen Drucksensor, beispielsweise einen Touchmode-Drucksensor.

### Stand der Technik

Es sind Drucksensoren bekannt, welche eine druckbeaufschlagbare, als bewegliche Elektrode ausgebildete Membran und eine durch einen Spalt beabstandete, feste Elektrode umfassen, welche eine Art Plattenkondensator ausbilden. Im klassischen Betrieb ist die Ausdehnung der Membran unter Druck geringer als die Höhe des Spalts. Die Druckmessung wird somit auf eine Kapazitätsmessung zurückgeführt. Das Messsignal derartiger Drucksensoren ist jedoch in der Regel nichtlinear.

Zur Verbesserung der Linearität des Messsignals und der Überlastsicherheit des Sensors ist das Konzept des Touchmode-Betriebs bekannt, welches darauf beruht, dass die Membran beim niedrigsten zu messenden Druck schon die feste Elektrode berührt, welche entsprechend elektrisch isoliert ist. Bei einer Druckerhöhung "rollt" sich die Membran auf der festen Elektrode ab, wobei sich die Berührungsfläche, die so genannte Touchfläche, vergrößert. Prozessschwankungen, wie Schichtdickenschwankungen und Schichtstressschwankungen, bei der Herstellung derartiger Drucksensoren können die Linearität des Messsignals jedoch stören. Die im Touchmode-Betrieb zunächst lineare Kapazität-Druck-Kennlinie, geht nämlich in eine Sättigung über, wenn die Touchfläche aufgrund solcher Schwankungen einen bestimmten, von Membranabmessung und Spaltweite abhängigen, Anteil der Membranfläche überschreitet, was die Kosten durch größeren Abgleichaufwand beziehungsweise verringerte Ausbeute erhöht.

Aus der Schrift US 2005/0183508 A1 ist ein Drucksensor bekannt, bei dem eine starre Elektrode auf einem Substrat angeordnet ist und mit einer Isolationsschicht abgedeckt ist. Oberhalb der starren Elektrode ist eine leitfähige Membran angebracht, die von der starren Elektrode beabstandet ist. Ein Vorsprung auf der Isolationsschicht verhindert eine Berührung der Isolationsschicht durch die Membran bei deren Durchbiegung.

### Offenbarung der Erfindung

Gegenstand der vorliegenden Erfindung ist ein Drucksensor, welcher eine Membranelektrode, insbesondere als bewegliche Elektrode, eine feste Elektrode und eine dielektrische Schicht umfasst, wobei eine Fläche der festen Elektrode mit der dielektrischen Schicht bedeckt ist, wobei die Membranelektrode und die dielektrische Schicht einander gegenüberliegend angeordnet und zumindest teilweise durch eine, eine Kavität ausbildende Zwischenschicht beabstandet sind, und der dadurch gekennzeichnet ist, dass die feste Elektrode in dem zur Kavität gegenüberliegenden Abschnitt eine erste Aussparung aufweist, wobei, die von der Außenumfangsfläche der in Form eines in sich geschlossenen Grabens ausgebildeten Aussparung umschlossene Fläche oder die Deckfläche der in Form eines Körpers mit zwei parallelen, ebenen Flächen und einer Mantelfläche begrenzt wird, die von parallelen Geraden ausgebildet wird, ausgebildeten Aussparung der Fläche (dₘₐₓ ) entspricht, auf welcher sich die Membranelektrode und die dielektrische Schicht bei einem auf den Drucksensor ausgeübten Druck (pₘₐₓ), für welchen der Drucksensor maximal ausgelegt ist, berühren.

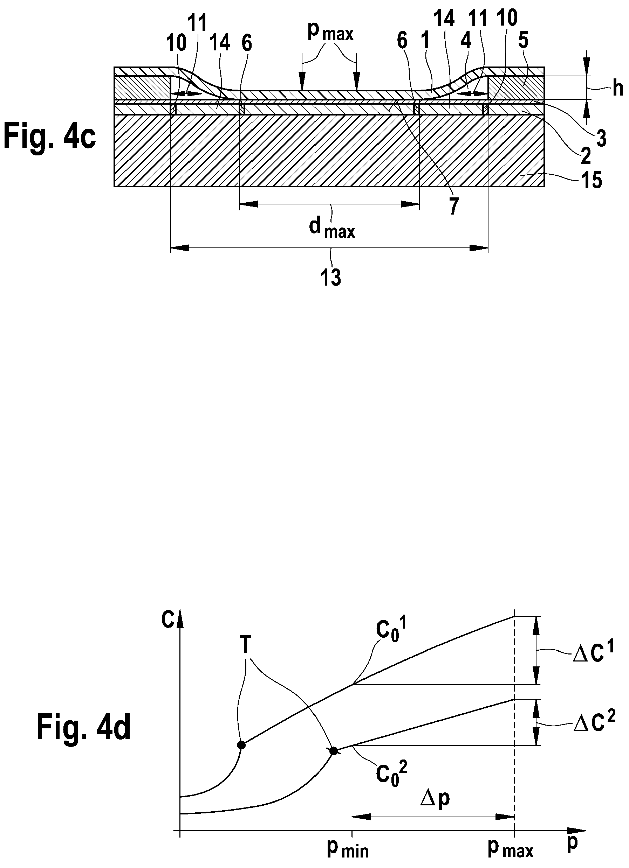

Die vorliegende Erfindung beruht auf der Erkenntnis, dass bei kapazitiven Drucksensoren mit einer Membranelektrode als beweglicher Elektrode die Kapazität-Druck-Kennlinie durch Strukturierung, beispielsweise laterale Strukturierung, der festen Elektrode beeinflusst werden kann. Bei entsprechender Gestaltung der Elektrodenform kann die Abhängigkeit der Sensorkenngröße ΔC/C₀/Δp von Prozessschwankungen, beispielsweise Schichtdickenschwankungen und Schichtstressschwankungen, vorteilhafterweise deutlich verkleinert und die Linearität des Messsignals verbessert werden (siehe Figur 4d). Ein weiterer Vorteil ist, dass der erfindungsgemäße Drucksensor auf einfache Weise realisierbar ist und verglichen mit der Herstellung von herkömmlichen Touchmode-Sensoren lediglich eine zusätzliche Maskenebene benötigt. Darüber hinaus kann ein erfindungsgemäßer Drucksensor eine gute mechanische, elektrische und/oder thermische Stabilität, eine gute Überlastsicherheit, eine hohe Dynamik und/oder einen einfachen und kostengünstigen Aufbau, beispielsweise durch mikromechanische Massenfertigung, aufweisen.

Im Rahmen der vorliegenden Erfindung ist die erste Aussparung in Form eines in sich geschlossenen Grabens, insbesondere eines das Elektrodenmaterial der festen Elektrode zertrennenden Grabens (Trenchgraben) ausgebildet. Der in sich geschlossene Graben kann dabei beispielsweise im Wesentlichen rund, insbesondere kreisförmig, elliptisch oder oval, oder polygonal, beispielsweise rechteckig oder quadratisch, ausgestaltet sein.

Im Rahmen der vorliegenden Erfindung ist die erste Aussparung in Form eines Zylinders im Allgemeinen Sinn ausgebildet. Dabei kann unter einem "Zylinder im Allgemeinen Sinn" ein Körper verstanden werden, welcher von zwei parallelen, ebenen Flächen (Grundfläche und einer Deckfläche) und einer Mantelfläche, die von parallelen Geraden ausgebildet wird, begrenzt wird. Das heißt, dass beispielsweise auch ein Prisma, Parallelepiped oder Quader ein Zylinder im Allgemeinen Sinn sein kann. Insbesondere kann die erste Aussparung in Form eines Kreiszylinders oder Quaders ausgebildet sein. Zum Beispiel kann die erste Aussparung in Form eines flachen Kreiszylinders oder Quaders ausgebildet sein.

Im Rahmen einer weiteren, bevorzugten Ausführungsform der vorliegenden Erfindung ist die dielektrische Schicht von der Membranelektrode berührbar. Insbesondere kann die Membranelektrode die dielektrische Schicht bereits bei einem auf den Drucksensor ausgeübten Druck, für welchen der Drucksensor minimal ausgelegt ist, berühren. Beispielsweise kann es sich bei dem erfindungsgemäßen Drucksensor, um einen Drucksensor mit Berührungsmodus (Touchmode), beispielsweise um einen Touchmode-Drucksensor, handeln. Vorzugsweise ist die erste Aussparung gegenüberliegend zu der von der Membranelektrode berührbaren Fläche der dielektrischen Schicht ausgebildet.

Die erste Aussparung kann vollständig mit einem dielektrischen Material gefüllt sein. Im Rahmen einer weiteren bevorzugten Ausführungsform der vorliegenden Erfindung ist eine in Form eines in sich geschlossenen Grabens ausgebildete erste Aussparung, insbesondere vollständig, mit Luft gefüllt.

Im Rahmen einer weiteren, bevorzugten Ausführungsform der vorliegenden Erfindung weist die feste Elektrode eine zweite Aussparung auf. Die zweite Aussparung kann insbesondere in Form eines in sich geschlossenen Grabens, insbesondere eines das Elektrodenmaterial der festen Elektrode zertrennenden Grabens (Trenchgraben), ausgebildet sein. Beispielsweise kann ist die zweite Aussparung gegenüberliegend zum Randbereich der Kavität ausgebildet sein. Vorzugsweise entspricht die von der Außenumfangsfläche der zweiten Aussparung umschlossene Fläche der von der Außenumfangsfläche der Kavität umschlossenen Fläche. Die zweite Aussparung ist vorzugsweise zumindest teilweise mit einem dielektrischen Material, vorzugsweise Luft, gefüllt. Die in Form eines in sich geschlossenen Grabens ausgebildete, zweite Aussparung kann teilweise mit einem dielektrischen Material, vorzugsweise Luft, und zur elektrischen Kontaktierung des von ihr umschlossenen Elektrodenbereichs teilweise mit einem elektrisch leitenden Material gefüllt sein. Der von der in Form eines in sich geschlossenen Grabens ausgebildeten, zweiten Aussparung umschlossene Elektrodenbereich kann jedoch auch durch eine Leiterbahn elektrisch kontaktiert werden. Dabei kann die zweite Aussparung vollständig mit einem dielektrischen Material, vorzugsweise Luft, gefüllt sein.

Die Kavität kann im Rahmen der vorliegenden Erfindung durch ein Ätzverfahren hergestellt sein. In der Kavität liegt bei einem erfindungsgemäßen Drucksensor vorzugsweise ein Vakuum oder ein sehr niedriger Gasdruck vor. Auf diese Weise kann eine Federwirkung durch ein Gaspolster minimiert werden.

Die feste Elektrode kann bei einem erfindungsgemäßen Drucksensor schichtförmig ausgebildet sein. Insbesondere kann die feste Elektrode aus, beispielsweise hochdotiertem, Polysilizium, ausgebildet sein. Darüber hinaus kann die feste Elektrode auf einem Substrat, beispielsweise einer Substratschicht, angeordnet sein.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen:
- Fig. 1a: einen schematischen Querschnitt durch einen herkömmlichen Touchmode-Drucksensor unter minimal messbarem Druck;
- Fig. 1b: den Touchmode-Drucksensor aus Fig. 1a unter maximal messbarem Druck;
- Fig. 1c: eine Kapazität-Druck-Kennlinie des Touchmode-Drucksensors aus Fig. 1a und 1b;
- Fig. 2a: eine Draufsicht auf eine erste erfindungsgemäße Ausführungsform einer festen Elektrode;
- Fig. 2b: einen Querschnitt durch einen erfindungsgemäßen Drucksensor mit einer festen Elektrode gemäß der in Fig. 2a gezeigten, ersten erfindungsgemäßen Ausführungsform unter maximal messbarem Druck;
- Fig. 3a: eine Draufsicht auf eine zweite erfindungsgemäße Ausführungsform einer festen Elektrode;
- Fig. 3b: einen Querschnitt durch einen erfindungsgemäßen Drucksensor mit einer festen Elektrode gemäß der in Fig. 3a gezeigten, zweiten erfindungsgemäßen Ausführungsform unter maximal messbarem Druck;
- Fig. 4a: eine Draufsicht auf eine Ausgestaltung einer dritten erfindungsgemäßen Ausführungsform einer festen Elektrode;
- Fig. 4b: eine Draufsicht auf eine andere Ausgestaltung einer dritten erfindungsgemäßen Ausführungsform einer festen Elektrode;
- Fig. 4c: einen Querschnitt durch einen erfindungsgemäßen Drucksensor mit einer festen Elektrode gemäß der in Fig. 4a oder 4b gezeigten, dritten erfindungsgemäßen Ausführungsform unter maximal messbarem Druck; und
- Fig. 4d: eine Kapazität-Druck-Kennlinie eines erfindungsgemäßen Drucksensors gemäß Fig. 2b, 3b und 4c.

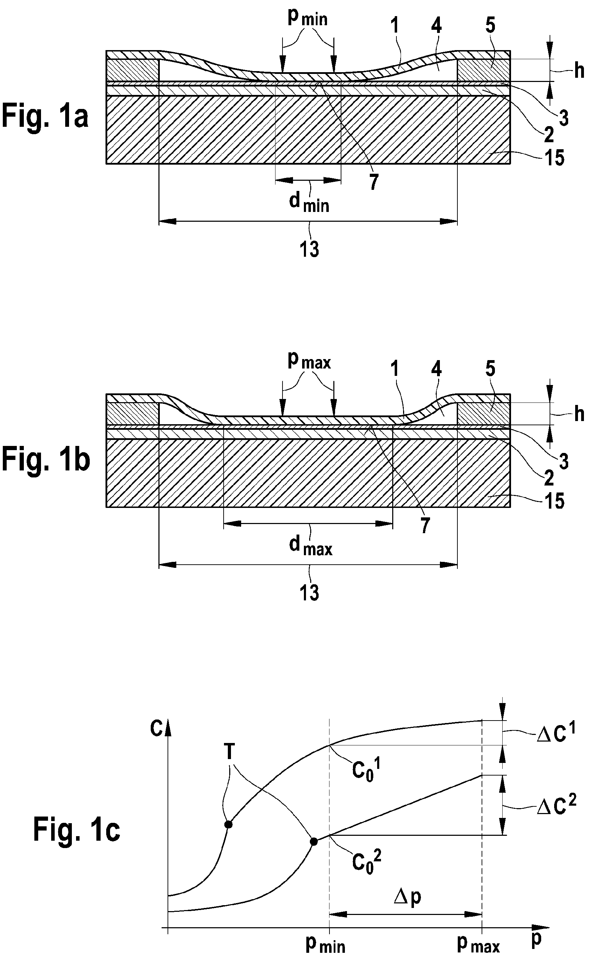

Figur 1a zeigt einen schematischen Querschnitt durch einen herkömmlichen Touchmode-Drucksensors unter minimal messbarem Druck **pₘᵢₙ**, welcher eine Membranelektrode **1**, eine feste Elektrode **2** und eine dielektrische Schicht **3** umfasst. Dabei ist die feste Elektrode **2** als Elektrodenschicht ausgebildet, welche auf einer Fläche mit der dielektrischen Schicht **3** bedeckt ist. Die feste Elektrode **2** ist wiederum auf einer Substratschicht **15** angeordnet. Figur 1 a zeigt, dass die Membranelektrode **1** und die dielektrische Schicht **3** einander gegenüberliegend angeordnet und teilweise durch eine, eine Kavität **4** ausbildende Zwischenschicht **5** beabstandet sind. Figur 1a zeigt weiterhin, dass die Membranelektrode 1 die dielektrische Schicht **3** bereits unter minimal messbarem Druck auf der Länge beziehungsweise Fläche **dₘᵢₙ** berührt (minimale Touchfläche). Das heißt, die Auslegung für einen Touchmode-Drucksensor erfolgt vorzugsweise derart, dass unter Berücksichtigung aller Prozessschwankungen, Schichtspannungen und Betriebstemperaturen beim kleinsten zu messenden Druck schon Touchmode vorliegt.

Figur 1b zeigt den Touchmode-Drucksensor aus Figur 1a unter maximal messbarem Druck. Figur 1b veranschaulicht, dass sich die Membranelektrode **1** bei steigendem Druck auf der dielektrischen Schicht **3** abrollt, wobei sich die berührte Länge beziehungsweise Fläche bis hin zur maximalen, berührten Länge beziehungsweise Fläche **dₘₐₓ** (maximale Touchfläche) vergrößert.

Figur 1c zeigt eine Kapazität-Druck-Kennlinie des Touchmode-Drucksensors aus Figur 1a und 1b, wobei die beiden Kurven die Kennlinien der Grenzmuster eines derartigen Touchmode-Drucksensors darstellen, wie sie im Rahmen der Prozessschwankungen auftreten können. Figur 1c illustriert, dass die Membranelektrode **1** die feste Elektrode **2** bis zum Erreichen des Touchpunktes **T** noch nicht berührt und die Kapazität exponentiell mit dem Druck gemäß der Beziehung C~1/(h-D*p) ansteigt, wobei D die Federkonstante der Membranelektrode **1** bezüglich des Drucks ist. Nach Erreichen des Touchpunkts **T** rollt sich die Membranelektrode **1** bei weiterer Druckerhöhung auf der festen Elektrode **2** ab, wodurch sich die Touchfläche **d** vergrößert. Figur 1c veranschaulicht, dass am Touchpunkt **T** die Kennlinie abknickt, zunächst einen annähernd linearen Verlauf annimmt und anschließend mit zunehmender Touchfläche **d** in eine Sättigung übergeht, da sich die Membranelektrode **1** aufgrund zunehmender Membranspannungen "versteift". Figur 1c zeigt weiterhin, dass das der Druckdifferenz (pₘₐₓ- pₘᵢₙ) entsprechende Messsignal zwischen **ΔC¹** und **ΔC²** im Rahmen der Prozessschwankungen streuen kann. Ein solcher Streubereich der Kennlinie ist insbesondere, wenn das Auswertekonzept auf eine Empfindlichkeitskenngröße der Form ΔC/C₀/Δp angewiesen ist, unvorteilhaft.

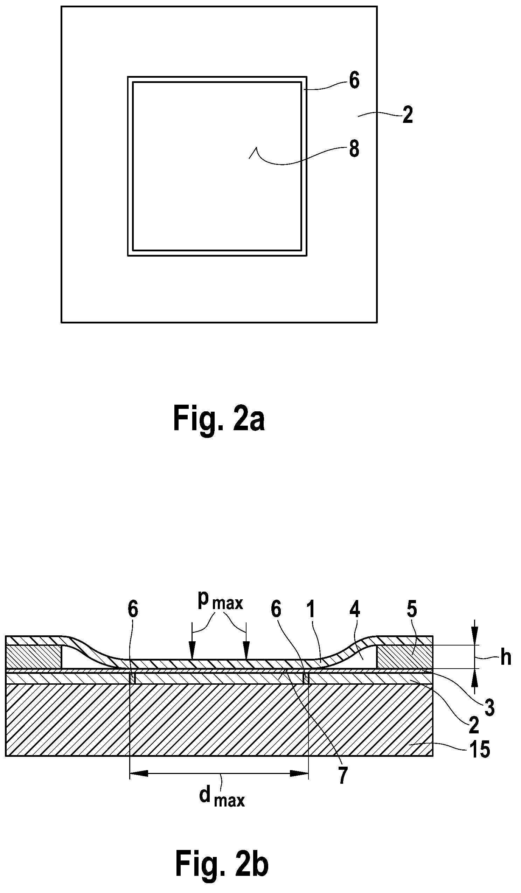

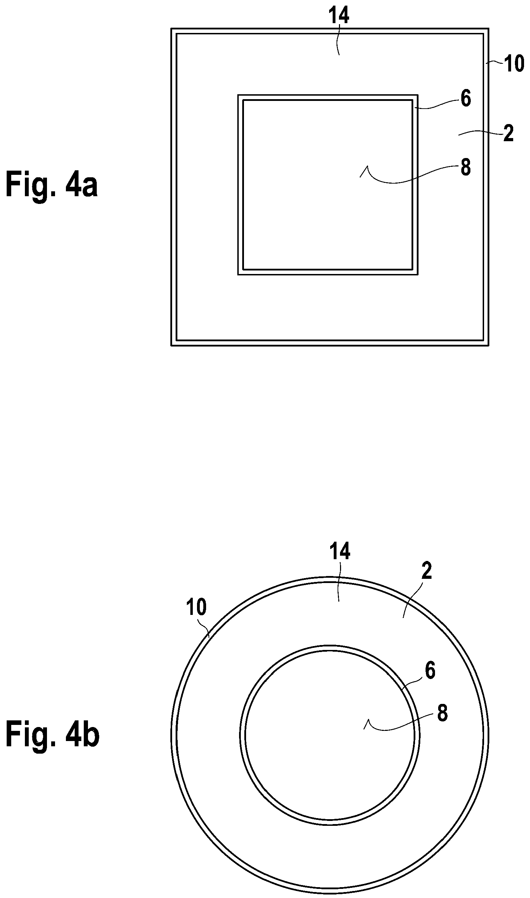

Die vorliegende Erfindung beruht auf der Idee, den nach dem Touchpunkt **T** anfänglich steilen Anstieg der Kapazität-Druck-Kennlinie durch passende Aussparung/en im Elektrodenbereich der festen Elektrode **2** abzuflachen, das heißt die Grundkapazität **C₀¹** abzusenken und damit **ΔC¹** und **ΔC²** einander ähnlich zu machen. Umfangreiche Finite-Elemente-Simulationen haben ergeben, dass es vorteilhaft sein kann, den kompletten Bereich unter der maximalen Touchfläche dₘₐₓ von dem zur Kapazitätsmessung wirksamen Elektrodenbereich auszusparen. Die Figuren 2a, 3a, und 4a zeigen entsprechende Ausgestaltungen für eine rechteckige, insbesondere quadratische, Membranelektrode **1**. Figur 4b veranschaulicht eine entsprechende Ausgestaltung für eine kreisrunde Membranelektrode **2**.

Die Figuren 2a und 2b zeigen eine Draufsicht auf eine erste erfindungsgemäße Ausführungsform einer festen Elektrode **2** beziehungsweise einen Querschnitt durch einen erfindungsgemäßen Drucksensor mit einer festen Elektrode **2** gemäß der ersten erfindungsgemäßen Ausführungsform unter maximal messbarem Druck **pₘₐₓ.** Die Figuren 2a und 2b illustrieren, dass sich der erfindungsgemäße Drucksensor dadurch von dem in den Figuren 1a und 1b gezeigten herkömmlichen Drucksensor unterscheidet, dass die feste Elektrode **2** in dem zur Kavität **4** gegenüberliegenden Abschnitt eine erste Aussparung **6** aufweist. Im Rahmen der ersten erfindungsgemäßen Ausführungsform ist die erste Aussparung **6** in Form eines in sich geschlossenen, rechteckigen, insbesondere quadratischen, Grabens ausgebildet. Insbesondere ist die Aussparung **6** in Form eines das Elektrodenmaterial der festen Elektrode **2** zertrennenden Grabens, eines so genannten Trenchgrabens ausgebildet. Fertigungstechnisch ist dies dadurch zu realisieren, dass ein ursprünglich vollflächiger Elektrodenbereich **2** mit einem Trenchgraben versehen wird, der genau dem Umriss der gewünschten Aussparung folgt. Dieser Graben ist im Rahmen der gezeigten Ausführungsform mit einem dielektrischen Material, vorzugsweise Luft, gefüllt. Auf diese Weise kann der mittlere Elektrodenmaterial-Bereich von dem übrigen Elektrodenmaterial abgegrenzt und dadurch die Grundkapazität gesenkt werden. Der zur Kapazitätsmessung wirksame Elektrodenbereich der festen Elektrode **2** ist dabei bezüglich des zur Kapazitätsmessung wirksamen Elektrodenbereichs der Membranelektrode **1** lateral ausgebildet und angeordnet. Die Figuren 2a und 2b zeigen, dass die erste Aussparung **6** gegenüberliegend zu der von der Membranelektrode **1** berührten Fläche **7** der dielektrischen Schicht **3** ausgebildet ist. Darüber hinaus zeigen die Figuren 2a und 2b, dass die von der Außenumfangsfläche der in Form eines in sich geschlossenen Grabens ausgebildeten Aussparung **6** umschlossene Fläche **8** der Fläche **dₘₐₓ** entspricht, auf welcher sich die Membranelektrode **1** und die dielektrische Schicht **3** bei einem auf den Drucksensor ausgeübten Druck **pₘₐₓ**, für welchen der Drucksensor maximal ausgelegt ist, berühren. Mit anderen Worten, der Umriss der ersten Aussparung **6** entspricht dem Umriss der maximalen Berührungsfläche **dₘₐₓ.**

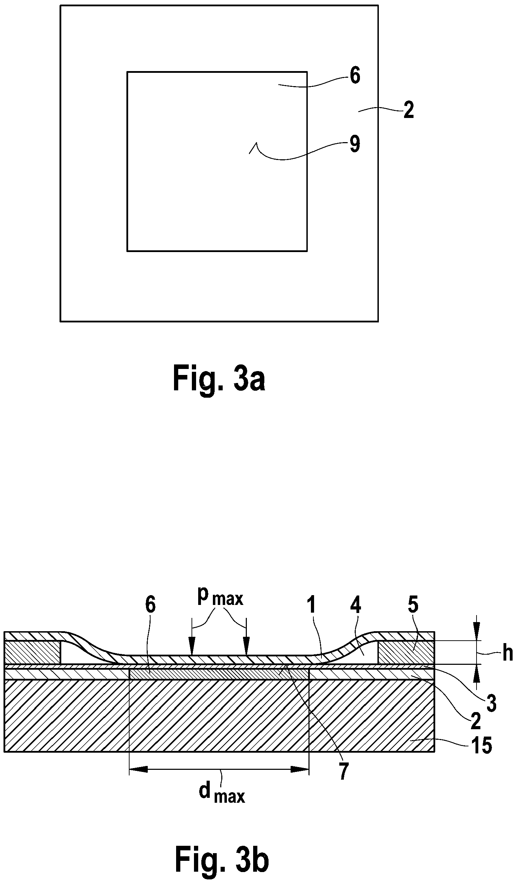

Die Figuren 3a und 3b zeigen eine Draufsicht auf eine zweite erfindungsgemäße Ausführungsform einer festen Elektrode **2** beziehungsweise einen Querschnitt durch einen erfindungsgemäßen Drucksensor mit einer festen Elektrode **2** gemäß der zweiten erfindungsgemäßen Ausführungsform unter maximal messbarem Druck **pₘₐₓ.** Der in den Figuren 3a und 3b gezeigte erfindungsgemäße Drucksensor unterscheidet sich dadurch von dem in den Figuren 2a und 2b gezeigten, erfindungsgemäßen Drucksensor, dass die Aussparung **6** in Form eines Zylinders im Allgemeinen Sinn ausgebildet ist. Insbesondere ist die Aussparung **6** in den Figuren 3a und 3b in Form eines Quaders ausgebildet. Dabei entspricht die Deckfläche **9** der quaderförmig ausgebildeten Aussparung **6** in den Figuren 3a und 3b der Fläche **dₘₐₓ**, auf welcher sich die Membranelektrode **1** und die dielektrische Schicht **3** bei einem auf den Drucksensor ausgeübten Druck **pₘₐₓ,** für welchen der Drucksensor maximal ausgelegt ist, berühren. Auch im Rahmen der in den Figuren 3a und 3b gezeigten, zweiten erfindungsgemäßen Ausführungsform der festen Elektrode **2** ist die erste Aussparung **6** vollständig mit einem dielektrischen Material gefüllt.

Die Figuren 4a bis 4c veranschaulichen zwei Ausgestaltungen einer dritten erfindungsgemäßen Ausführungsform einer festen Elektrode **2** sowie einen entsprechenden erfindungsgemäßen Drucksensor unter maximal messbarem Druck **pₘₐₓ**. Die dritte erfindungsgemäße Ausführungsform unterscheidet sich dadurch von der ersten erfindungsgemäßen Ausführungsform, dass die feste Elektrode **2** weiterhin eine zweite Aussparung **10** aufweist. Die Figuren 4a bis 4c zeigen, dass die zweite Aussparung **10** ebenfalls in Form eines in sich geschlossenen Grabens ausgebildet ist. Dabei umgibt der in sich geschlossene Graben der zweiten Aussparung den in sich geschlossenen Graben der ersten Aussparung **6**. Im Rahmen der in Figur 4a gezeigten Ausgestaltung ist der Graben rechteckig, insbesondere quadratisch, ausgebildet. Im Rahmen der in Figur 4b gezeigten Ausgestaltung ist der Graben kreisförmig ausgestaltet. Die Figuren 4a bis 4c illustrieren, dass die zweite Aussparung **10** gegenüberliegend zum Randbereich **11** der Kavität **4** ausgebildet ist, wobei die von der Außenumfangsfläche der zweiten Aussparung **10** umschlossene Fläche **12** der von der Außenumfangsfläche der Kavität **4** umschlossenen Fläche **13** entspricht. Mit anderen Worten, der Umriss der zweiten Aussparung **10** entspricht dem Umriss der Kavität **4**. Im Rahmen dieser Ausführungsform kann die zweite Aussparung **10** in Abhängigkeit von der Kontaktierung des von der zweiten Aussparung **10** umschlossenen Elektrodenbereichs **14** sowohl nur teilweise als auch vollständig mit einem dielektrischen Material, vorzugsweise Luft, gefüllt sein. Insofern der von der in Form eines in sich geschlossenen Grabens ausgebildeten, zweiten Aussparung **10** umschlossene Elektrodenbereich **14** durch eine nicht dargestellte Leiterbahn elektrisch kontaktiert wird, kann die zweite Aussparung **10** vollständig mit einem dielektrischen Material gefüllt sein. Die elektrische Kontaktierung des von ihr umschlossenen Elektrodenbereichs **14** kann jedoch auch derart erfolgen, dass die in Form eines in sich geschlossenen Grabens ausgebildete, zweite Aussparung **10** teilweise mit einem elektrisch leitenden Material gefüllt ist, wobei der andere Teil mit einem dielektrischen Material gefüllt sein kann. Die dritte erfindungsgemäße Ausführungsform hat den Vorteil, dass über die Breite der zweiten Aussparung **10** die Grundkapazität "feinjustiert" werden kann, insofern dies für das Auswertekonzept vorteilhaft ist.

Fig. 4d zeigt eine Kapazität-Druck-Kennlinie eines erfindungsgemäßen Drucksensors gemäß Fig. 2b, 3b und 4c, wobei die beiden Kurven die Kennlinien der Grenzmuster eines derartigen Touchmode-Drucksensors darstellen, wie sie im Rahmen der Prozessschwankungen auftreten können. Figur 4d illustriert, dass auch bei dem erfindungsgemäßen Drucksensor die Membranelektrode **1** die feste Elektrode **2** bis zum Erreichen des Touchpunktes **T** noch nicht berührt und die Kapazität exponentiell mit dem Druck gemäß der Beziehung C~1/(h-D*p) ansteigt, wobei D die Federkonstante der Membranelektrode **1** bezüglich des Drucks ist. Figur 4d veranschaulicht, dass am Touchpunkt **T**, ab dem sich die Membranelektrode **1** bei weiterer Druckerhöhung auf der festen Elektrode **2** abrollt, wodurch die Touchfläche **d** vergrößert wird, die Kennlinie abknickt, einen annähernd linearen Verlauf annimmt und diesen auch in dem Druckbereich, in dem die Kennlinie eines herkömmlichen Drucksensors in eine Sättigung übergeht (siehe Figur 1c), fortführt. Figur 4d zeigt weiterhin, dass die im Rahmen der Prozessschwankungen mögliche Streuung der Empfindlichkeitskenngröße ΔC/C₀/Δp viel kleiner ist als beim herkömmlichen Drucksensor (siehe Figur 1c).

## Patentansprüche

1. Drucksensor, umfassend
- eine Membranelektrode (1),
- eine feste Elektrode (2) und
- eine dielektrische Schicht (3),
wobei eine Fläche der festen Elektrode (2) mit der dielektrischen Schicht (3) bedeckt ist,
wobei die Membranelektrode (1) und die dielektrische Schicht (3) einander gegenüberliegend angeordnet und zumindest teilweise durch eine, eine Kavität (4) ausbildende Zwischenschicht (5) beabstandet sind,
wobei die feste Elektrode (2) in dem zur Kavität (4) gegenüberliegenden Abschnitt eine erste Aussparung (6) aufweist,
**dadurch gekennzeichnet, dass**
- die von der Außenumfangsfläche der in Form eines in sich geschlossenen Grabens ausgebildeten Aussparung (6) umschlossene Fläche (8) oder
- die Deckfläche (9) der in Form eines Körpers mit zwei parallelen, ebenen Flächen und einer Mantelfläche begrenzt wird, die von parallelen Geraden ausgebildet wird, ausgebildeten Aussparung (6) der Fläche (dₘₐₓ) entspricht, auf welcher sich die Membranelektrode (1) und die dielektrische Schicht (3) bei einem auf den Drucksensor ausgeübten Druck (pₘₐₓ), für welchen der Drucksensor maximal ausgelegt ist, berühren.

2. Drucksensor nach Anspruch 1, **dadurch gekennzeichnet, dass** die dielektrische Schicht (3) von der Membranelektrode (1) berührbar ist.

3. Drucksensor nach einem der Ansprüche 1 oder 2, **dadurch gekennzeichnet, dass** die erste Aussparung (6) gegenüberliegend zu der von der Membranelektrode (1) berührbaren Fläche (7) der dielektrischen Schicht (3) ausgebildet ist.

4. Drucksensor nach einem der Ansprüche 1 bis 3, **dadurch gekennzeichnet, dass** die erste Aussparung (6) vollständig mit einem dielektrischen Material gefüllt ist.

5. Drucksensor nach einem der Ansprüche 1 bis 4, **dadurch gekennzeichnet, dass** die feste Elektrode (2) eine zweite Aussparung (10) aufweist.

6. Drucksensor nach Anspruch 5, **dadurch gekennzeichnet, dass** die zweite Aussparung (10) in Form eines in sich geschlossenen Grabens ausgebildet ist.

7. Drucksensor nach einem der Ansprüche 5 oder 6, **dadurch gekennzeichnet, dass** die zweite Aussparung (10) gegenüberliegend zum Randbereich (11) der Kavität (4) ausgebildet ist.

8. Drucksensor nach einem der Ansprüche 5 bis 7, **dadurch gekennzeichnet, dass** die von der Außenumfangsfläche der zweiten Aussparung (10) umschlossene Fläche (12) der von der Außenumfangsfläche der Kavität (4) umschlossenen Fläche (13) entspricht.

9. Drucksensor nach einem der Ansprüche 5 bis 8, **dadurch gekennzeichnet, dass** die zweite Aussparung (10) zumindest teilweise mit einem dielektrischen Material, vorzugsweise Luft, gefüllt ist.

10. Drucksensor nach einem der Ansprüche 5 bis 9, **dadurch gekennzeichnet, dass**
- die in Form eines in sich geschlossenen Grabens ausgebildete, zweite Aussparung (10) teilweise mit einem elektrisch leitenden Material zur elektrischen Kontaktierung des von ihr umschlossenen Elektrodenbereichs (14) gefüllt ist, oder
- der von der in Form eines in sich geschlossenen Grabens ausgebildeten, zweiten Aussparung (10) umschlossene Elektrodenbereich (14) durch eine Leiterbahn elektrisch kontaktiert ist.

## Claims

1. Pressure sensor, comprising
- a membrane electrode (1),
- a fixed electrode (2) and
- a dielectric layer (3),
one surface of the fixed electrode (2) being covered by the dielectric layer (3),
the membrane electrode (1) and the dielectric layer (3) being arranged opposite each other and being at least partly spaced apart by an intermediate layer (5), forming a cavity (4),
the fixed electrode (2) having a first recess (6) in the section opposite the cavity (4), **characterized in that**
- the area (8) enclosed by the outer circumferential surface of the recess (6), formed in the shape of an intrinsically closed trench, or
- the top surface (9) of the recess (6) which is formed in the shape of a body having two parallel level surfaces and a circumferential surface which is formed by parallel straight lines
corresponds to the area (dₘₐₓ) over which the membrane electrode (1) and the dielectric layer (3) touch at a pressure (pₘₐₓ) exerted on the pressure sensor which is the maximum for which the pressure sensor is designed.

2. Pressure sensor according to Claim 1, **characterized in that** the dielectric layer (3) can be touched by the membrane electrode (1).

3. Pressure sensor according to either of Claims 1 and 2, **characterized in that** the first recess (6) is formed opposite to that surface (7) of the dielectric layer (3) that can be touched by the membrane electrode (1).

4. Pressure sensor according to one of Claims 1 to 3, **characterized in that** the first recess (6) is completely filled with a dielectric material.

5. Pressure sensor according to one of Claims 1 to 4, **characterized in that** the fixed electrode (2) has a second recess (10).

6. Pressure sensor according to Claim 5, **characterized in that** the second recess (10) is formed in the shape of an intrinsically closed trench.

7. Pressure sensor according to either of Claims 5 and 6, **characterized in that** the second recess (10) is formed opposite the edge region (11) of the cavity (4).

8. Pressure sensor according to one of Claims 5 to 7, **characterized in that** the area (12) enclosed by the outer circumferential surface of the second recess (10) corresponds to the area (13) enclosed by the outer circumferential surface of the cavity (4).

9. Pressure sensor according to one of Claims 5 to 8, **characterized in that** the second recess (10) is at least partly filled with a dielectric material, preferably air.

10. Pressure sensor according to one of Claims 5 to 9, **characterized in that**
- the second recess (10), formed in the shape of an intrinsically closed trench, is partly filled with an electrically conductive material to make electrical contact with the electrode region (14) that it encloses, or
- the electrode region (14) enclosed by the second recess (10) formed in the shape of an intrinsically closed trench has electrical contact made with it by a conductor track.

## Revendications

1. Capteur de pression, comprenant :
- une électrode à membrane (1),
- une électrode fixe (2) et
- une couche diélectrique (3),
dans lequel une surface de l'électrode fixe (2) est revête de la couche diélectrique (3),
dans lequel l'électrode à membrane (1) et la couche diélectrique (3) sont disposées l'une en face de l'autre et sont espacées au moins en partie par une couche intermédiaire (5) formant une cavité (4),
dans lequel l'électrode fixe (2) comporte un premier évidement (6) dans la partie opposée à la cavité (4), **caractérisé en ce que**
- la surface (8) entourée par la surface circonférentielle extérieure de l'évidement (6) réalisé sous la forme d'une tranchée fermée sur elle-même ou
- la surface de revêtement (9) de l'évidement (6) réalisé sous la forme d'un corps qui est délimitée par deux surfaces planes parallèles et par une surface d'enveloppe qui est formée par des droites parallèles, correspond à la surface (dₘₐₓ) sur laquelle l'électrode à membrane (1) et la couche diélectrique (3) viennent au contact l'une de l'autre pour une pression (pₘₐₓ) exercée sur le capteur de pression, qui est égale à la valeur maximale pour laquelle le capteur de pression est conçu.

2. Capteur de pression selon la revendication 1, **caractérisé en ce que** l'électrode à membrane (1) peut être mise en contact avec la couche diélectrique (3).

3. Capteur de pression selon l'une des revendications 1 ou 2, **caractérisé en ce que** le premier évidement (6) est réalisé de manière opposée à la surface (7) de la couche diélectrique (3) avec laquelle l'électrode à membrane (1) peut être mise en contact.

4. Capteur de pression selon l'une quelconque des revendications 1 à 3, **caractérisé en ce que** le premier évidement (6) est entièrement rempli d'un matériau diélectrique.

5. Capteur de pression selon l'une quelconque des revendications 1 à 4, **caractérisé en ce que** l'électrode fixe (2) comporte un second évidement (10).

6. Capteur de pression selon la revendication 5, **caractérisé en ce que** le second évidement (10) est réalisé sous la forme d'une tranchée fermée sur elle-même.

7. Capteur de pression selon la revendication 5 ou 6, **caractérisé en ce que** le second évidement (10) est réalisé de manière opposée à la zone de bord (11) de la cavité (4).

8. Capteur de pression selon l'une quelconque des revendications 5 à 7, **caractérisé en ce que** la surface (12) entourée par la surface circonférentielle extérieure du second évidement (10) correspond à la surface (13) entourée par la surface circonférentielle extérieure de la cavité (4).

9. Capteur de pression selon l'une quelconque des revendications 5 à 8, **caractérisé en ce que** le second évidement (10) est au moins partiellement rempli d'un matériau diélectrique, de préférence de l'air.

10. Capteur de pression selon l'une quelconque des revendications 5 à 9, **caractérisé en ce que**
- le second évidement (10) réalisé sous la forme d'une tranchée fermée sur elle-même est partiellement rempli d'un matériau électriquement conducteur pour une mise en contact électrique avec la zone d'électrode (14) entourée par celle-ci, ou
- la zone d'électrode (14) entourée par le second évidement (10) réalisé sous la forme d'une tranchée fermée sur elle-même est mise en contact électrique par une piste conductrice.
